Europäisches Patentamt

European Patent Office

Office européen des brevets

(11) Veröffentlichungsnummer: **0 324 954**

**A2**

(12) **EUROPÄISCHE PATENTANMELDUNG**

(21) Anmeldenummer: **88121086.8**

(22) Anmeldetag: **16.12.88**

(51) Int. Cl.⁴: **H04N 7/13**

(30) Priorität: **16.01.88 DE 3801116**

(43) Veröffentlichungstag der Anmeldung:
**26.07.89 Patentblatt 89/30**

(84) Benannte Vertragsstaaten:
**DE FR GB IT SE**

(71) Anmelder: **ROBERT BOSCH GMBH**
**Postfach 10 60 50**
**D-7000 Stuttgart 10(DE)**

(72) Erfinder: **Bock, Gerd**
**Ploetzenstrasse 102**
**D-3200 Hildesheim(DE)**
Erfinder: **Feige, Klaus**
**Odenwaldstrasse 26**
**D-1000 Berlin 41(DE)**
Erfinder: **Amor, Hamed**
**Bischof-Gerhard-Strasse**
**D-3200 Hildesheim(DE)**
Erfinder: **Vollmer, Rudolph**
**Bergfeldstrasse 21**
**D-3201 Barienrode(DE)**

(54) **Verfahren und Vorrichtung zur gemeinsamen Übertragung von digitalisierten Fernseh-, Ton- und Datensignalen.**

(57) Bei der gemeinsamen Übertragung von digitalisierten Fernseh-, Ton- und Datensignalen wird von diesen Signalen eine unterschiedliche Kanalkapazität benötigt. Dies erschwert die Eingliederung in vorhandene, genormte Übertragungsstrecken.

Die Erfindung schafft hier Abhilfe, in dem n-1 Kanäle einer n Kanäle zusammenfassenden Übertragungsstrecke für die Übertragung von Fernsehsignalen und ein Kanal für die Übertragung von Ton- und Datensignalen bestimmt werden. Die Kanäle werden untereinander gleich ausgestaltet so daß für die gemeinsame Signalverarbeitung gleiche Baugruppen verwendet werden können. In den Kanal für Ton- und Datensignale werden auch Fernsehbegleittonsignale übertragen. Außerdem werden in dem zusätzlichen Kanal auch Struktur und Synchronsignale für das gesamte System übermittelt.

## Verfahren und Vorrichtung zur gemeinsamen Übertragung von digitalisierten Fernseh-, Ton- und Datensignalen

Die Erfindung betrifft ein Verfahren zur gemeinsamen Übertragung von digitalisierten Fernseh-, Ton- und Datensignalen nach dem Oberbegriff des Anspruchs 1.

Kopfstationen von Kabelkommunikationsanlagen erhalten ihre Signale für die zu verteilenden Fernseh- und Rundfunkprogramme drahtlos und oder draht- oder leitungsgebunden. Dabei besitzt die leitungsgebundene Versorgung mit Signalen Vorteile, da keine Störungen durch andere Funkdienste oder - bei geeignet gewählten Leitungen - witterungsbedingte Einflüsse eintreten können.

Leitungsgebundene Übertragungsstrecken erfordern für ihre wirtschaftliche Nutzung eine möglichst vollständige Ausnutzung der verfügbaren Übertragungskapazität. Im Vergleich zu leitungsgebundenen Übertragungsstrecken in koaxialer Technik bietet die Glasfasertechnik eine höhere Kapazität sowie eine höhere Reichweite, geringeren Aufwand für Wartung und Unterhalt sowie eine gleichbleibende Übertragungsqualität. Für derartige Übertragungsstrecken sind inzwischen Normen festgelegt worden, die bei einer Einmoden-Glasfaser eine Gesamtkapazität von etwa 560 Mb/s vorsehen. An dieser Kapazität orientieren sich auch die Unterteilungen der Kanalkapazitäten in den verschiedenen Hierarchiestufen.

Für die gemeinsame Versorgung der Kopfstationen mit Fernseh- und Rundfunkprogrammen wird abhängig von den Fernsehsignalen und Tonsignalen eine unterschiedliche Kanalkapazität benötigt, die sich in die vorhandene Norm nicht ohne weiteres eingliedern läßt. Die Folge wäre nicht ausgenutzte Kanäle, die durch die sogenannte Stopftechnik mit informationslosen Inhalten aufgefüllt werden müssen, damit die Übertragung und Verarbeitung möglich ist. Es ist zwar denkbar, ein speziell für Fernseh- und Tonsignale angepaßtes Übertragungssystem für Kopfstationen zu schaffen, dieses wäre jedoch ebenfalls unwirtschaftlich, da die vorhandenen Übertragungsnetze nicht mitbenutzt werden können und auch auf erprobte Bauelemente Meßgeräte und Endgeräte nicht zurückgegriffen werden könnte.

Der Erfindung liegt die Aufgabe zugrunde, ein Verfahren zur gemeinsamen Übertragung von digitalisierten Fernseh-, Ton- und Datensignalen so auszugestalten, daß eine bessere Ausnutzung der zur Verfügung stehenden Übertragungsnetze möglich ist.

Diese Aufgabe wird bei einem Verfahren nach dem Oberbegriff des Anspruchs 1 durch die im kennzeichnenden Teil angegebenen Merkmale gelöst.

Bei dem erfindungsgemäßen Verfahren wird eine Unterscheidung nach der benötigten Kanalkapazität der Signale vorgenommen. Dabei handelt es sich einerseits um Fernsehsignale und andererseits um Ton- und Datensignale, wobei die Tonsignale freie Tonsignale oder auch Begleittonsignale der Fernsehsignale sein können. Da die von den Tonsignalen benötigte Kanalkapazität nur ein Bruchteil der von den Fernsehsignalen benötigten Kanalkapazität ausmacht, ist es möglich, mehreren Kanälen für Fernsehsignale nur einen Kanal für Ton- und Datensignale beizuordnen, in dem neben den Begleittonsignalen für die Fernsehsignale noch eine Vielzahl von freien Tonsignalen, also z.B. Rundfunkprogramme untergebracht werden. Darüber hinaus können in diesem Kanal auch weitere Struktur und Synchronsignale für die Fernsehsignale übermittelt werden. Schließlich bietet der zusätzliche Kanal noch die Möglichkeit, plesiochrone Signale mit zu übermitteln.

Die Aufteilung kann so vorgenommen werden, daß die Ton- und Datensignale gerade eine solche Kapazität belegen, wie die Fernsehsignale. Im Rahmen der vorhandenen Normen ist dies bei einer Übertragungsstrecke für 8 Kanäle der Fall, so daß 7 Kanäle davon mit Fernsehsignalen und 1 Kanal mit Ton- und Datensignalen belegt werden können.

Indem gemäß einer Weiterbildung die Kapazität aller n Kanäle gleich bemessen wird, wird die Eingliederung in vorhandene Datennetze erheblich erleichtert. Darüber hinaus ist auch die Signalverarbeitung und Auswertung in den Endgeräten durch die Möglichkeit, in größerem Umfang standardisierte Baugruppen einzusetzen, vereinfacht.

Die Erfindung betrifft ferner eine Vorrichtung zur gemeinsamen Übertragung von digitalisierten Fernseh-, Ton- und Datensignalen nach dem Oberbegriff des Anspruchs 17.

Diesbezüglich liegt hier die Aufgabe zugrunde, eine Vorrichtung so auszugestalten, daß eine bessere Ausnutzung der zur Verfügung stehenden Übertragungsnetze möglich wird.

Diese Aufgabe wird bei einer Vorrichtung nach dem Oberbegriff des Anspruchs 17 durch die im Kennzeichen angegebenen Merkmale gelöst.

Bei der erfindungsgemäßen Vorrichtung wird zwischen Fernsehsignalen einerseits und- Ton und Datensignalen andererseits unterschieden. Da die Ton- und Datensignale für sich eine wesentlich geringere Kapazität einnehmen, als die Fernsehsignale, können sie zu einem einzigen Kanal zusammengefaßt werden. Bei den Tonsignalen kann es sich neben freien Tonsignalen, z.B. von Rundfunkprogrammen auch um Begleittonsignale der Fernsehsignale handeln. Durch die Zuordnung der verschiedenen Signale zu den einzelnen Kanälen gelingt es, ein Übertragungssystem zu schaffen, das in vorhandene Übertragungsnetze eingegliedert werden kann.

Werden z.B. insgesamt 8 Kanäle vorgesehen, von denen dann 7 Kanäle für Fernsehsignale und der restliche Kanal für Ton- und Datensignale reserviert werden, so können jeweils 2 dieser Kanäle in einem Kanal der 4. PCM-Hierarchiestufe übertragen wrden. Dabei wird vorzugsweise die Steuerung der Multiplexschaltung und der Demultiplexschaltung so vorgenommen, daß die jedem Kanal gewährte Torzeit gleich bemessen ist. Dies führt dazu, daß jeder der Kanäle eine Kapazität von 70 Mb/s erhält.

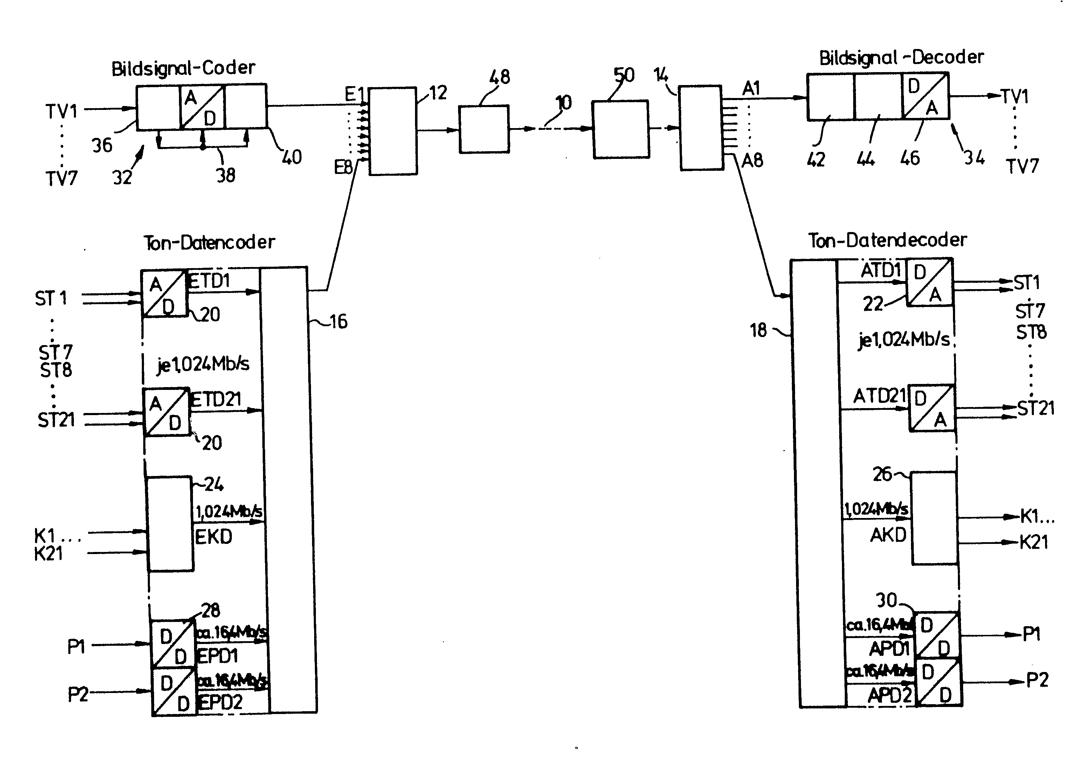

Weiterbildungen und vorteilhafte Ausführungsformen der Erfindung ergeben sich aus den Ansprüchen, der Beschreibung und der Zeichnung, die eine praktische Ausführung der erfindungsgemäßen Vorrichtung zeigt.

Verfahren und Vorrichtung werden anhand der Zeichnung näher erläutert.

Die Zeichnung zeigt eine angedeutete Übertragungsstrecke 10, z.B. eine Einmoden-Glasfaserleitung, mit der auf der linken Seite ein Senderteil und auf der rechten Seite ein Empfängerteil der erfindungsgemäßen Vorrichtung verbunden ist.

Der Senderteil umfaßt eine Multiplexschaltung 12 mit 8 Eingängen E1...E8. An den Eingängen E1 - E7 liegen Fernsehsignale an. Dies können Fernsehsignale der PAL-, NTSC- oder SECAM-Norm ohne Tonsignale in FBAS-codierter Form oder D2-MAC mit Tonsignalen und Daten sein. Diese Fernsehsignale, mit TV1 - TV7 bezeichnet, werden durch einen Fernsehsignal-Coder so aufbereitet, daß in die entsprechenden Eingänge E1 - E7 der Multiplexschaltung 12 digitale Datenströme von 70 Mb/s hineinfließen.

Der Signalcoder 32 ist für FBAS-Signale und D2-MAC-Signale unterschiedlich aufgebaut. Als wesentliche Baugruppen enthält er eine Taktgewinnungsstufe 36, einen Analog-Digital-Wandler 38 und einen Signalprozessor 40. Der Signalprozessor 40 nimmt neben einer Parallel-Serien-Wandlung der Daten auch eine Datenreduktion vor, um die gewünschte Datenrate gewährleisten zu können.

Am Eingang E8 der Multiplexschaltung 12 liegen Ton- und Datensignale an. Diese werden dem Eingang E8 über eine Untermultiplexschaltung 16 zugeführt, die aus verschiedenen Quellen einen entsprechenden Datenstrom aufbereitet. Der achte Kanal wird genauso wie die 7 übrigen Kanäle behandelt. Die Torzeiten der Kanäle sind gleich und dementsprechend werden die Daten gleichberechtigt abwechselnd über die Übertragungsstrecke 10 geleitet.

Die Untermultiplexschaltung 16 ist im Prinzip ähnlich der Multiplexschaltung 12 ausgebildet. Statt 8 Eingängen umfaßt sie jedoch Eingänge für 68 Kanäle, von denen jeder eine Kapazität von 1,024 Mb/s besitzt. Die Kapazität der Kanäle ist nach der für 2 Tonsignale benötigten Kapazität bemessen. Die Zusammenfassung von 2 Monokanälen zu einem Stereotonkanal wurde vorgenommen, da die meisten Tonsignale bereits heute Stereophon sind und eine Erweiterung der Fernsehbegleittonsignale auf Stereo ebenfalls zu erwarten ist. Bei der gemeinsamen Verarbeitung von Stereotonsignalen treten eventuelle Fehler in beiden Signalteilen gleichmäßig hervor und werden deshalb weniger bemerkt. Außerdem wird die erforderliche Abzahl von Analog-Digital-Wandlern und Digital-Anlaog-Wandlern reduziert.

Von den Eingängen der Untermultiplexschaltung 16 sind 21 für Stereotonkanäle vorgesehen. Es handelt sich um die Eingänge ETD1 - ETD21. Dabei sind die ersten 7 Eingänge ETD1 - ETD7 für Begleittonsignale zu den Fernsehsignalen reserviert. Dies ist jedoch nur erforderlich, wenn die Fernsehsignale als FBAS-Signale auftreten. Bei D2-MAC-Signalen sind die Tonsignale bereits im komplexen Signal enthalten und brauchen nicht getrennt übertragen zu werden. In diesem Falle können die Ton-Kanäle für andere Tonsignale verwendet werden.

Die übrigen Eingänge ETD8 - ETD21 sind für freie Tonsignale, also insbesondere für Rundfunkprogramme, verfügbar. Die Tonsignale werden mit einer Auflösung von 16 bit übertragen. Für die Digitalisierung sorgen vor den genannten Eingängen geschaltete Analog-Digital-Wandler 20, welchen die Tonsignale ST1 - ST21 zugeführt werden. Die Analog-Digital-Wandler arbeiten linear. Im Gegensatz zu den Fernsehsignalen wird keine Datenreduktion vorgenommen.

An einem weiteren Eingang EKD der Untermultiplexschaltung 16 liegen Struktursignale an. Diese Struktursignale enthalten Angaben zur Unterscheidung der Tonsignale als Begleittonsignale oder freie Tonsignale, ferner für Mono, Stereo oder 2-Tonübertragung sowie für die Zuordnung zu den Kanalnummern. Ausreichend ist hierfür eine 8 Bit-Kennung, von der die ersten beiden Bits für Mono, Stereo, 2-Ton oder freier Tonkanal verwendet werden und die übrigen 6 Bit die Kanalnummern kennzeichnen. Dem Eingang EKD ist ein Kennungsmultiplex 24 vorgeschaltet, in dem die Kennungen K1 - K21 der Tonsignale zeitgerecht in den Datenstrom eingefügt werden.

Es besteht die Möglichkeit, auch plesiochrone Signale zu übertragen. Dabei handelt es sich um bereits in digitaler Form vorliegende Steuer und/oder Datensignale, die vom Betreiber der Netze für Steuer oder Meßzwecke übertragen werden.

Da diese Signale jedoch asynchron zu den übrigen über die Übertragungsstrecke 10 geschickten Signalen sind, wird hier eine Synchronisation vorgenommen. Dies geschieht durch Digital-Digital-Wandler 28, mit denen eine 4-fache Überabtastung der plesiochronen Signale P1 und P2 vorgenommen wird. Die Eingänge EPD1 und EPD2 der Untermultiplexschaltung 16 belegen jeweils 16 Kanäle.

Die übrigen Kanäle werden von Synchronsignalen belegt, welche in einer in der Untermultiplexschaltung 16 integrierten Steuerschaltung erzeugt werden. Es handelt sich dabei einmal um Synchronsignale, die die Unterkanäle betreffen, als auch um zusätzliche Synchronsignale, die für die richtige Zuordnung der Kanäle 1 - 8 der Multiplexschaltung 12 sorgen. Diese Synchronsignale können z.B. so gewählt sein, daß dem gesamten über die Übertragungsstrecke 10 geleiteten Datenstrom eine eigene Kennummer zugeordnet wird, die sich im Empfangsteil der Vorrichtung ständig anzeigen läßt und so einfache Prüfungen auf Verkabelungs- oder Schleiffehler ermöglicht.

Der die Multiplexschaltung 12 verlassende Datenstrom von 560 Mb/s gelangt gegebenenfalls über einen Leitungscoder 48 und weitere nicht dargestellte Übertragungseinrichtungen über die Übertragungsstrecke 10, nicht dargestellte Empfangseinrichtungen sowie einen Leitungsdecoder 50 zu einer Demultiplexschaltung 14. Diese Demultiplexschaltung 14 führt eine Aufteilung der seriell übertragenen Daten in die ursprünglichen 8 Kanäle durch, wobei an den Ausgängen A1 - A7 wieder Fernsehsignale und an dem Ausgang A8 Ton- und Datensignale anliegen.

Den Ausgängen A1 - A7 sind Fernsehsignaldecoder nachgeschaltet, die ihrerseits jeweils einen Signalprozessor 42, eine Taktgewinnungsstufe 44 und einen Digital-Ana log-Wandler 46 umfassen. In den Fernsehsignal-Decodern 34 erfolgt die Wiederherstellung der ursprünglichen Signale in analoger Form als FBAS-Signale ohne Ton oder als D2-MAC-Signale als komplexes analoges und digitales Signal mit Ton. Diese sind mit TV1 - TV7 gekennzeichnet.

Die an dem Ausgang A8 anliegenden Ton und Datensignale gelangen zu einer Unterdemultiplexschaltung 18, die ähnlich der Demultiplexschaltung 14 aufgebaut ist und eine Aufteilung der Signale in Unterkanäle vornimmt. An Ausgängen ATD1 - ATD21 liegen Tonsignale an, wobei die Ausgänge ATD1 - ATD7 für Begleittonsignale zu den Fernsehsignalen reserviert sind. Die übrigen Ausgänge ATD8 - ATD21 enthalten freie Tonsignale, also vorzugsweise Rundfunkprogramme. Die genannten Signale sind nach Durchlaufen von Digital-Analog-Wandlern 22 wieder als analoge Signale ST1 - ST21 verfügbar.

Aus den Strukturdaten, die am Ausgang AKD anliegen, werden über einen Kennungsdemultiplexer 26 Kennungen K1 - K21 ausgegeben, die wieder eine Kennzeichnung der Tonsignale ST1 - ST21 im Hinblick auf die vorerwähnten Eigenschaften und die Zuordnung zu den Kanalnummern ermöglichen.

An Ausgängen APD1 und APD2 sind jeweils die überabgetasteten plesiochronen Signale vorhanden, die nach Umwandlung mittels Digital-Digital-Wandlern 30 wieder in die ursprüngliche asynchrone digitale Form zurückverwandelt werden und als plesiochrone Signale P1 und P2 abgreifbar sind.

Entsprechend den Synchronschaltungen in der Untermultiplexschaltung 16 sind in der Unterdemultiplexschaltung 18 Auswerteschaltungen vorhanden, welche die Synchronsignale für die Unterkanäle und diejenigen für den Rahmen auswerten und eine entsprechende Zuordnung der Signale zu den Ausgängen A1 - A8 sowie auf der Ebene der Unterkanäle zwischen den dort erwähnten Ausgängen vornehmen.

Das von den Auswertestufen in der Unterdemultiplexschaltung 18 ausgewertete Rahmensynchronsignal ermöglicht auch die Synchronisation des gesamten Systems nach dem Einschalten, in dem ein Mustererkennungsprozeß im ankommenden seriellen 560 Mb-Datenstrom vorgenommen wird. Dabei wird durch Zeitfensterprüfungen die Wahrscheinlichkeit einer Fehlsynchronisation auf Nutzdaten verringert.

## Ansprüche

1. Verfahren zur gemeinsamen Übertragung von digitalisierten Fernseh-, Ton- und Datensignalen über eine mehrere Kanäle im Zeitmultiplex zusammenfassende Übertragungsstrecke, dadurch gekennzeichnet, daß in n-1 Kanälen einer n Kanäle umfassenden Übertragungsstrecke Fernsehsignale und in einem Kanal Ton- und Datensignale übertragen werden.

2. Verfahren nach Anspruch 1, dadurch gekennzeichnet, daß die Übertragungsstrecke für n gleich 8 Kanäle bemessen wird.

3. Verfahren nach Anspruch 1 oder 2, dadurch gekennzeichnet, daß die Kapazität aller n Kanäle gleich bemessen wird.

4. Verfahren nach Anspruch 3, dadurch gekennzeichnet, daß die Kapazität aller n Kanäle nach der von den Fernsehsignalen benötigten Kapazität bemessen wird.

5. Verfahren nach Anspruch 3 oder 4, dadurch gekennzeichnet, daß die Kapazität auf die Hälfte der in der 4. PCM-Hierachiestufe der CCITT-Norm pro Kanal zur Verfügung stehenden Kapazität bemessen wird (ca. 70 Mb/s).

6. Verfahren nach einem oder mehreren der Ansprüche 1 - 5, dadurch gekennzeichnet, daß der für die Ton- und Datensignale vorgesehene Kanal seinerseits in Unterkanäle unterteilt wird.

7. Verfahren nach Anspruch 6, dadurch gekennzeichnet, daß die Unterkanäle für freie Tonsignale, Begleittonsignale zu den Fernsehsignalen, Struktur-und Synchronsignale sowie gegebenenfalls für plesiochrone Signale reserviert werden.

8. Verfahren nach Anspruch 7, dadurch gekennzeichnet, daß die Struktursignale durch Kennungen der einzelnen Tonsignale (z.B. Mono oder Stereo, Begleitton oder freier Ton, Kanalnummer) gebildet werden.

9. Verfahren nach Anspruch 7 oder 8, dadurch gekennzeichnet, daß die Synchronsignale durch unterkanalbezogene Synchronsignale und durch Rahmensynchronsignale der gesamten n Kanäle gebildet werden.

10. Verfahren nach einem oder mehreren der Ansprüche 6 - 9, dadurch gekennzeichnet, daß die Kapazität der Unterkanäle nach der von Zwei-Tonsignalen benötigten Kapazität bemessen wird.

11. Verfahren nach Anspruch 10, dadurch gekennzeichnet, daß die Kapazität der für die Ton- und Datensignale reservierten Unterkanäle auf 1,024 Mb/s bemessen wird.

12. Verfahren nach Anspruch 10 oder 11, dadurch gekennzeichnet, daß die Tonsignale vor der Übertragung paarweise linear mit 16 Bit digitalisiert und nach der Übertragung in analoge Signale zurückgewandelt werden.

13. Verfahren nach Anspruch 11 oder 12, dadurch gekennzeichnet, daß 21 Unterkanäle für 21 Stereotonsignale oder 42 Monotonsignale oder einer Kombination aus beiden reserviert werden.

14. Verfahren nach einem oder mehreren der Ansprüche 11 - 13, dadurch gekennzeichnet, daß ein Unterkanal für Struktursignale reserviert wird.

15. Verfahren nach einem oder mehreren der Ansprüche 7 - 14, dadurch gekennzeichnet, daß die plesiochronen Signale mehrfach, insbesondere 4-fach, überabgetastet werden.

16. Verfahren nach Anspruch 15, dadurch gekennzeichnet, daß 32 Unterkanäle für die plesiochronen Signale reserviert werden.

17. Vorrichtung zur gemeinsamen Übertragung von dititalisierten Fernseh-, Ton- und Datensignalen ber eine mehrere Kanäle im Zeitmultiplex zusammenfassende Übertragungsstrecke (10) mit einer Multiplexschaltung (12) vor der Übertragungsstrecke (10) und einer Demultiplexschaltung (14) hinter der Übertragungsstrecke (10), dadurch gekennzeichnet, daß an n-1 Eingängen (E1...E7) der Multiplexschaltung (12) bzw. Ausgängen (A1...A8) der Demultiplexschaltung (14) Fernsehsignale und an einem Eingang (E8) der Multiplexschaltung (12) bzw. Ausgang (A8) der Demultiplexschaltung (14) Ton- und Datensignale anliegen.

18. Vorrichtung nach Anspruch 17, dadurch gekennzeichnet, daß die Multiplex- (12) und Demultiplexschaltung (14) Eingänge (E1...E8) bzw. Ausgänge (A1...A8) für n = 8 Kanäle aufweisen.

19. Vorrichtung nach Anspruch 17 oder 18, dadurch gekennzeichnet, daß die Multiplex- (12) und Demultipexschaltung (14) mit Steuerungen verbunden sind, durch welche die jedem Kanal gewährte Torzeit gleich bemessen ist.

20. Vorrichtung nach einem oder mehreren der Ansprüche 17 - 19, dadurch gekennzeichnet, daß die Taktrate der Multiplexschaltung (12) für die Gesamt signale ca. 560 Mb/s beträgt.

21. Vorrichtung nach einem oder mehreren der Ansprüche 17 - 20, dadurch gekennzeichnet, daß vor dem Eingang (E8) der Multiplexschaltung (12) für den Ton- und Datensignale aufnehmenden Kanal eine Untermultiplexschaltung (16) und hinter dem Ausgang (A8) der Demultiplexschaltung (14) für den selben Kanal eine Unterdemultiplexschaltung (18) angeordnet ist.

22. Vorrichtung nach Anspruch 21, dadurch gekennzeichnet, daß die Taktrate der Untermultiplexschaltung (16) für die Signale des gesamten Kanals ca. 70 Mb/s und für die Signale eines Unterkanals 1,024 Mb/s beträgt.

23. Vorrichtung nach Anspruch 21 oder 22, dadurch gekennzeichnet, daß an 21 paarigen Eingängen (ETD1...ETD21) der Untermultiplexschaltung (16) und paarigen Ausgängen (ATD1...ATD21) der Unterdemultiplexschaltung (18) Tonsignale anliegen.

24. Vorrichtung nach Anspruch 23, dadurch gekenn zeichnet, daß vor den Eingängen (ETD1...ETD21) lineare Analog-Digital-Wandler (20) und hinter den Ausgängen (ATD1...ATD21) lineare Digital-Analog-Wandler (22) angeordnet sind.

25. Vorrichtung nach einem oder mehreren der Ansprüche 21 - 24, dadurch gekennzeichnet, daß an einem Eingang (EKD) der Untermultiplexschaltung (16) und einem Ausgang (AKD) der Unterdemultiplexschaltung (18) Struktursignale anliegen.

26. Vorrichtung nach Anspruch 25, dadurch gekennzeichnet, daß vor dem Eingang (EKD) ein Kennungsmultiplexer (24) und hinter dem Ausgang (AKD) ein Kennungsdemultiplexer (26) angeordnet ist.

27. Vorrichtung nach einem oder mehreren der Ansprüche 19 - 26, dadurch gekennzeichnet, daß die Untermultiplexschaltung (16) eine Steuerschaltung umfaßt, in der Synchronsignale für den Rahmen der Kanäle und die Unterkanäle erzeugt werden und die Unterdemultiplexschaltung (18) eine Auswerteschaltung umfaßt, in der Synchronsignale für den Rahmen der Kanäle und für die Unterkanäle ausgewertet werden.

28. Vorrichtung nach einem oder mehreren der Ansprüche 17 - 27, dadurch gekennzeichnet, daß an 2 x 16 Unterkanälen umfassenden Eingängen (EPD1, EPD2) der Untermultiplexschaltung (16) und Ausgängen (APD1, APD2) der Unterdemultiplexschaltung (18) plesiochrone Signale anliegen.

29. Vorrichtung nach Anspruch 28, dadurch gekennzeichnet, daß vor den Eingängen (EPD1, EPD2) Digital-Digital-Wandler (28) und hinter den Ausgängen (APD1, APD2) Digital-Digital-Wandler (30) angeordnet sind, mittels denen eine Überabtastung und anschließende Rückwandlung durchführbar ist.

EP 0 324 954 A2

Bildsignal-Coder

Bildsignal-Decoder

TV1

TV7

36

32

38

40

E1

E8

12

48

10

50

14

A1

A8

42

44

46

34

TV1

TV7

Ton-Datencoder

Ton-Datendecoder

ST 1

A
D
ETD1

20

16

ATD1
D
A

22

ST1

ST7
ST8

je 1,024 Mb/s

je 1,024 Mb/s

ST7
ST8

ST21

A
D
ETD21

20

ATD21
D
A

ST21

24

1,024 Mb/s

EKD

K1...
K21

26

1,024 Mb/s

AKD

K1...

K21

28

D
D
EPD1

ca.16,4 Mb/s

P1

30

ca.16,4 Mb/s
APD1
D
D

P1

P2

D
D
EPD2

ca.16,4 Mb/s

ca.16,4 Mb/s
APD2
D
D

P2

2 1 6 1 2